# DEMANDE DE BREVET EUROPEEN

(11) **EP 2 672 418 A1**
(43) Date de publication de la demande: **11.12.2013**
(21) Numéro de dépôt: 12305640.0
(22) Date de dépôt: 06.06.2012
(51) Int. Cl.: G06F 21/60

(54) **Procédé d'anonymisation**

(71) Demandeur: Gemalto SA, 92190 Meudon (FR)
(72) Inventeur: Pauliac, Mireille, 92197 Meudon Cedex (FR); Peirani, Béatrice, 92197 Meudon Cedex (FR); Praden, Anne-Marie, 92197 Meudon Cedex (FR)

(57) **Abrégé**

La présente invention a pour objet un procédé d'anonymisation de données aptes à concourir à l'identification d'un utilisateur lors de la collecte d'un profil dudit utilisateur par un serveur de collecte de données de ciblage. Pour mettre en oeuvre cette anonymisation un serveur d'anonymisation est interposé entre un terminal de l'utilisateur et le serveur de collecte. Les données de profil collectées sont chiffrées par le terminal avec une clé secrète partagée avec le serveur de collecte de données. Ces données de profil complétées des données aptes à concourir à l'identification de l'utilisateur sont ensuite transmises au serveur d'anonymisation. Le serveur d'anonymisation chiffre les données aptes à concourir à l'identification de l'utilisateur avec une clé d'anonymisation dudit serveur d'anonymisation avant de relayer les données collectées chiffrées et les données d'identification anonymisées audit serveur de collecte.

## Description

### Domaine de l'invention

La présente invention a pour objet un procédé d'anonymisation. L'invention a également pour objet un système mettant en oeuvre un tel procédé d'anonymisation.

### Etat de la technique

Aujourd'hui, la multiplication des applications et services proposés grâce aux nouvelles technologies telles que Internet, les réseaux sans fils..., engrange une quantité accrue de renseignements sur les utilisateurs pour leur offrir des services personnalisés et augmenter leur efficacité. C'est le cas par exemple de la publicité ciblée qui exploite des informations de profil de l'utilisateur pour lui proposer des produits qui peuvent retenir son attention. Ces renseignements sur l'utilisateur peuvent être par exemple sa localisation en utilisant la technique de géo-localisation fournie par les GPS (Global Positioning System), ses habitudes de vie grâce à la collection des informations de consommation électrique dans les nouveaux réseaux électriques intelligents aussi appelés SmartGrid, ses préférences, ses loisirs et même ses préférences politiques et religieuses grâce au traçage et à la collecte des informations sur les programmes de TV visualisés ou les sites Internet visités que proposent les applications de mesure d'audience. Ces informations couplées aux identifiants variés qui permettent d'identifier l'utilisateur (par exemple l'adresse IP sur Internet ou les informations sur les HotSpot Wifi, les adresses MAC, l'identifiant de la carte SIM utilisée dans le cadre de la téléphonie mobile), permettent d'affiner le profil des utilisateurs, et d'améliorer par exemple le ciblage des publicités sur Internet. Ce ciblage pose en particulier des problèmes tels que :
- le risque accru et croissant d'intrusion dans la vie privée,
- le risque de détournement de données concernant la vie privée des individus, ou concernant les centres d'intérêts, achats, etc.
- le risque d'associations ou groupements pouvant éventuellement être ainsi surveillés ou orientés par des Etats totalitaires, mafias, sectes, concurrents inamicaux, etc.

Une telle concentration d'informations sur les individus et leur conservation inquiètent les organisations de défense de la vie privée. La protection de la vie privée des utilisateurs est aujourd'hui une obligation légale dans beaucoup de pays. Ces lois ont pour but de mettre en place des systèmes permettant de protéger la vie privée de l'utilisateur ainsi que de le sensibiliser sur les risques encourus à divulguer des informations personnelles. De tels systèmes sont notamment :
- la demande du consentement de l'utilisateur avant toute utilisation des données personnelles,
- la gestion de l'exportation de ces données et la transmission à des organismes tiers,
- la protection des données stockées sur des serveurs,
- l'anonymisation au plus tôt des données personnelles

Cette juridiction autour des données personnelles freine le déploiement d'applications qui s'avèrent pourtant très efficaces par exemple pour augmenter la vente de produits (comme la publicité ciblée) ou pour équilibrer et optimiser les consommations d'énergie (comme les Smartgrids).

Cependant, ces lois sont toutefois souvent inapplicables faute de support technologique. En outre, les garanties de respect de la vie privée apportées par ces lois ne sont souvent pas applicables notamment à des collecteurs de telles données dont les serveurs sont situés hors du territoire national d'application de ces lois.

L'une des solutions pour garantir la protection des données personnelles consiste à appliquer un processus d'anonymisation aux données manipulées. L'anonymisation des données est un procédé consistant à dissocier l'identité d'un utilisateur de l'ensemble de ses données personnelles. Ce processus vise à éviter qu'une personne, un individu, soit identifiable au travers des données collectées. Les collecteurs de données sont aujourd'hui obligés par la loi de certains pays à identifier l'ensemble des données personnelles et confidentielles stockées sur leur système d'information, de les anonymiser tout en s'équipant de mécanismes de sécurisation et de contrôle adéquats.

Des outils d'anonymisation ont été créés en ce sens afin de sécuriser le stockage et la consultation de ces informations personnelles. Les outils d'anonymisation sont soit des moyens de chiffrement, des moyens de traduction qui consistent à appliquer une table de translation au contenu, une application "Mask" permettant de cacher une partie des champs de la base de données, des moyens de remplacement des données personnelles ou encore des moyens d'intégration de données fictives de manière aléatoire pour tromper le lecteur.

Aujourd'hui, il appartient au collecteur de telles informations d'adapter les mesures de sécurité et les outils au degré de sensibilité des données personnelles hébergées afin de garantir le respect des lois relatives à la vie privée. Cependant, la mise en place de tels mesures et outils est laissée à la discrétion du collecteur.

Ainsi actuellement, s'est fait sentir le besoin d'améliorer les processus d'anonymisation connus de sorte à protéger les données personnelles et donc à les rendre anonymes même pour le collecteur.

### Exposé de l'invention

L'invention a justement pour but de répondre à ce besoin. Pour cela, l'invention propose un procédé d'anonymisation dont l'architecture générale du système le mettant en oeuvre garantit une protection des données personnelles.

L'architecture du réseau et les protocoles d'échanges entre les différents acteurs sont tels que le critère « personnel » des données manipulées est éliminé à sa source par le procédé d'anonymisation de l'invention. Avec l'invention, la garantie de l'anonymisation des données d'identification des utilisateurs n'est de ce fait plus laissée à la discrétion des collecteurs de données de ciblage, mais est réalisée en amont de cette collecte.

Le procédé de l'invention est mis en oeuvre de sorte que les organismes de collecte de données personnelles peuvent collecter les informations d'un utilisateur spécifique (mesure d'audience, relevé d'opinion, localisation...) selon son profil sans pour autant connaître cet utilisateur ni ses données d'identification, et envoyer des messages ciblés (publicités, alertes, ...) selon son profil sans pour autant connaître cet utilisateur ni ses données d'identification.

Pour cela, l'invention propose d'interposer entre l'utilisateur et l'organisme de diffusion de messages ciblés un serveur d'un organisme tiers qui contribue au processus d'anonymisation des données personnelles des utilisateurs qui ont été collectées (que l'on appellera dans le reste de la description serveur d'anonymisation).

Avant de relayer à l'organisme de diffusion les données de profil de l'utilisateur, le serveur d'anonymisation chiffre avec une clé d'anonymisation toutes les données qui peuvent potentiellement concourir à l'identification de l'utilisateur et rendre cette identification impossible pour l'organisme de diffusion.

Le procédé de l'invention vise à assurer qu'aucun des acteurs excepté l'utilisateur lui-même n'a accès simultanément aux données personnelles de l'utilisateur et à un de ses identifiants permettant de lui attribuer ses données.

L'invention propose ainsi un procédé permettant une anonymisation complète et irréversible afin de protéger les données personnelles des utilisateurs.

Plus particulièrement, l'invention a pour objet un procédé d'anonymisation de données aptes à concourir à l'identification d'un utilisateur lors de la collecte d'un profil dudit utilisateur par un serveur de collecte de données, ledit procédé comprenant les étapes suivantes :
- chiffrement des données de profil à collecter avec une clé de confidentialité partagée entre ledit terminal et le serveur de collecte de données,
- transmission des données de profil à collecter chiffrées et des données aptes à concourir à l'identification de l'utilisateur à un serveur d'anonymisation interposé entre le terminal et le serveur de collecte
- chiffrement des données aptes à concourir à l'identification de l'utilisateur avec une clé d'anonymisation dudit serveur d'anonymisation avant de relayer les données collectées et d'identification chiffrées audit serveur de collecte.

L'invention a également pour objet un système mettant en oeuvre un tel procédé.

### Brève description des dessins

L'invention sera mieux comprise à la lecture de la description qui suit et à l'examen des figures qui l'accompagnent. Celles-ci sont présentées à titre indicatif et nullement limitatif de l'invention.
Les figures 1 et 3 montrent respectivement une représentation schématique d'une architecture d'un système destiné à anonymiser des données d'identification d'un utilisateur, selon un mode de réalisation de l'invention.
La figure 2 montre une illustration d'étapes correspondant à un mode de fonctionnement du procédé de l'invention.

### Description détaillée de modes de réalisation de l'invention

La présente invention va maintenant être décrite en détail en référence à quelques modes de réalisation préférés, comme illustré dans les dessins annexés. Dans la description suivante, de nombreux détails spécifiques sont prévus afin d'offrir une compréhension approfondie de la présente invention. Il sera évident, cependant, à un homme de l'art, que la présente invention peut être pratiquée sans tout ou partie de ces détails spécifiques.

Afin de ne pas obscurcir inutilement la description de la présente invention, des structures bien connues, des dispositifs ou des algorithmes n'ont pas été décrits en détail.

Il est à rappeler que, dans la description, quand une action est attribuée à un programme ou un appareil comprenant un microprocesseur, cette action est exécutée par le microprocesseur commandé par des codes instructions enregistrés dans une mémoire de cet appareil.

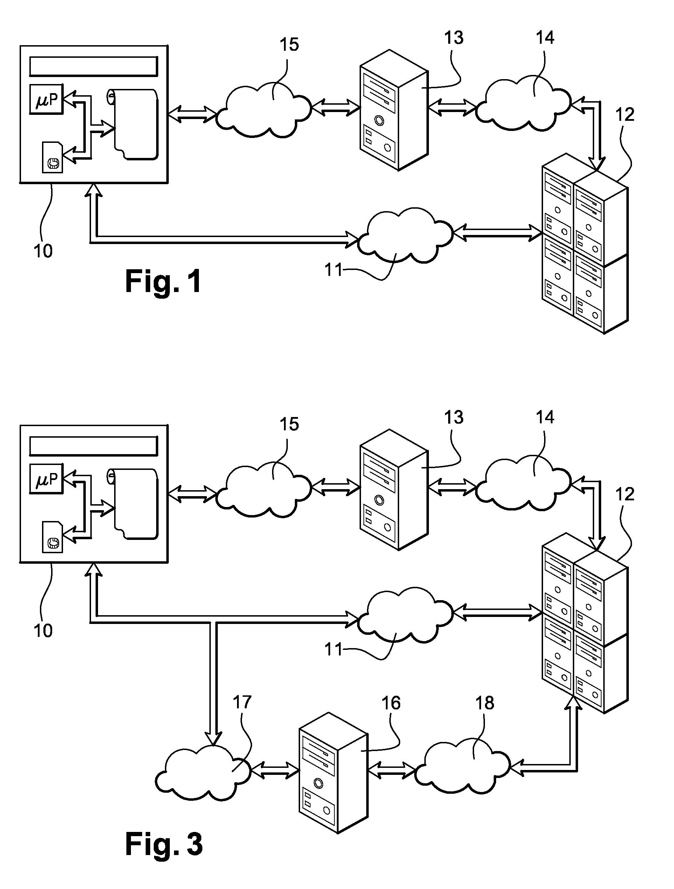

La figure 1 montre une représentation schématique d'une architecture d'un mode de réalisation de l'invention. La figure 1 montre un terminal 10 d'un utilisateur connecté à un premier réseau 11. Dans l'exemple de la figure 1, le terminal 10 de l'utilisateur est un téléphone mobile. Le terminal 10 pourrait aussi être un ordinateur individuel, un assistant personnel ou tout autre dispositif équivalent.

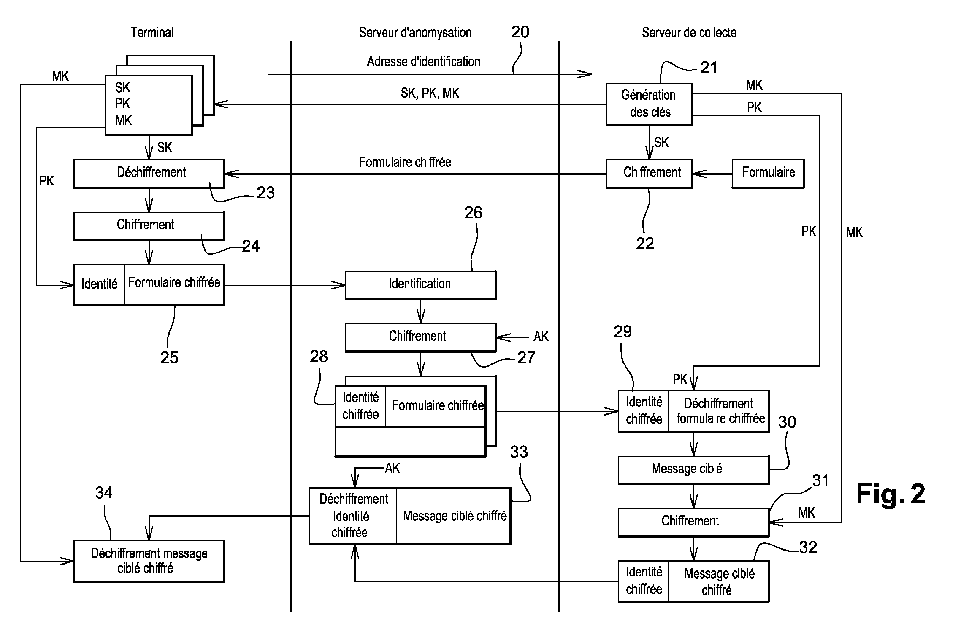

Durant une phase d'initialisation, un serveur de collecte 12 de données de ciblage comportemental acquiert, à une étape 20 préliminaire illustrée à la figure 2, une adresse du terminal 10 de l'utilisateur.

L'adresse du terminal 10 de l'utilisateur est un identifiant permettant audit terminal d'établir des communications et de recevoir des messages. Cette adresse d'identification pourrait être n'importe quel identifiant associé à l'utilisateur, un IMSI ou un IMEI dans le cadre d'un réseau mobile, mais aussi un identifiant d'une carte à puce du terminal 10 de l'utilisateur abonné de type ICCID ou la trame TAR obtenue par le téléphone au «boot» de la carte à puce, cet identifiant pouvant aussi être basé sur tout moyen d'identification de l'utilisateur auprès de l'opérateur de raccordement : une adresse IP, une adresse Ethernet, voire une adresse mail, un identifiant de type SIP ou VoIP, un identifiant de type ENUM ou tout autre identifiant électronique étant aussi envisageable.

Cette adresse d'identification du terminal 10 peut être obtenue par le serveur de collecte 12 à l'aide d'une liste d'inclusion comportant des adresses d'identification de personnes qui ont clairement exprimé leur volonté de figurer sur cette liste et de recevoir des messages ciblés en provenance dudit serveur de collecte. Cette adresse d'identification peut également être obtenue par le serveur de collecte 12, soit au cours d'une saisie, soit au cours d'un dialogue entre le terminal 10 et le serveur de collecte 12 via le premier réseau 11.

Le serveur de collecte 12 de données peut être un serveur d'un annonceur apte à assurer la diffusion des publicités des contenus éditoriaux ou des vignettes de produits ou de service d'e-commerce en adéquation avec les données comportementales du terminal 10 de l'utilisateur. Le serveur de collecte 12 peut également être un serveur d'un institut de sondage ou de mesure d'audience. De manière générale, le serveur de collecte 12 peut être tout type d'entité de collectage de données relatives au comportement des utilisateurs, à leurs opinions, à l'identification de leurs centres d'intérêt et/ou à leur localisation. Le serveur de collecte 12 peut être également un collecteur de relevé de consommation électrique d'un abonné au réseau électrique, permettant d'optimiser la consommation du réseau électrique et d'en prévoir la charge.

Selon l'invention, toute communication entre le terminal 10 de l'utilisateur et le serveur de collecte 12, et comprenant les données à collecter, se fait par l'intermédiaire d'un serveur tiers 13 d'anonymisation au travers duquel s'effectue le processus d'anonymisation. Pour ce faire, le terminal 10 et le serveur d'anonymisation13 sont raccordés par un troisième réseau 15. Le serveur d'anonymisation 13 et le serveur de collecte 12 12 de données sont raccordés par un deuxième réseau 14.

Le serveur d'anonymisation 13 peut être une entité qui fournit un accès au réseau à l'utilisateur et lui attribue un identifiant pour communiquer sur ledit réseau. Le serveur d'anonymisation 13 pourrait être par exemple un opérateur de réseau mobile, un opérateur de réseau mobile virtuel ou un fournisseur d'accès d'Internet (FAI) chez qui l'utilisateur est abonné. Le serveur d'anonymisation 13 peut également être un serveur d'un organisme privé spécialisé et reconnu.

Le terme réseau désigne tout moyen de communication se rapportant par exemple aux technologies telles que : GSM, GPRS, EDGE, UMTS, HSDPA, LTE, IMS, CDMA, CDMA2000 définies par les normes 3GPP et 3GPP2 ou encore les technologies Ethernet, Internet, WI-FI (abréviation de wireless fidelity) et/ou Wimax, RFID (acronyme de Radio Frequency Identification, signifiant radio-identification); NFC (acronyme de Near Field Communication, signifiant communication en champ proche, s'inscrit dans une technique d'échanges de données à une distance de quelques centimètres); Bluetooth, IrDA (acronyme de Infrared Data Association, permet le transfert de fichiers par infrarouge) etc.

Dans un mode de réalisation, le premier réseau 11 est un réseau Internet, le deuxième réseau 14 est un réseau Internet et le troisième réseau 15 est un réseau de téléphonie mobile.

La figure 2 montre une illustration d'étapes d'un mode de fonctionnement du procédé de l'invention. A une étape 21, le serveur de collecte 12 génère, selon des algorithmes de génération bien connu de l'homme du métier, un trio de clés formé par une clé de critère SK, une clé de profil PK et une clé de message MK. Ce trio de clés est généré durant la phase d'initialisation. Ce trio de clés est ensuite transmis au terminal 10 pour mémorisation. De manière préférée, ces clés sont mémorisées de façon sécurisée dans une mémoire du terminal 10 ou dans un élément sécurisé dudit terminal, cet élément sécurisé pouvant être une carte à puce.

Ce trio de clés est généré dans le but d'éviter que le serveur d'anonymisation 13 ait facilement accès aux communications entre le terminal 10 et le serveur de collecte 12 de données. Les protocoles de génération et d'échanges de clés sont relativement bien connus de l'homme de métier et ne nécessitent donc pas d'être décrits en détail.

Dans un autre mode de réalisation, le trio de clés est généré par un générateur de clés et transmis ensuite au serveur de collecte 12 et au terminal 10.

Durant la phase d'initialisation, le serveur de collecte 12 élabore une liste de critères pour l'établissement du profil utilisateur. Dans cette liste on peut trouver par exemple le genre de l'utilisateur (Homme ou femme), l'âge, la nationalité, la préférence musicale, les occupations préférées, ...

Cette liste de critères peut également être la liste des programmes visualisés dans le cas d'une collecte d'audience, ou le relevé des consommations électriques dans le cas d'une application liée aux réseaux électriques intelligents (appelés également en anglais Smartgrid), ou la localisation GPS (Global Positioning System : système de localisation américain) ou Galiléo (équivalent européen du GPS) pour les applications de services liés à la localisation ou pour les alertes ciblées en fonction de la localisation.

Cette liste de critères peut être par exemple sous forme d'un formulaire de saisie de données de ciblage. Ces données de ciblage permettent de construire un profil de l'utilisateur. Ce formulaire comporte des champs, à remplir par l'utilisateur, relatifs entre autres à des centres d'intérêt, à des passe-temps, à des opinions et/ou à des caractéristiques physiques (poids, taille, âge, sexe....).

Le serveur de collecte 12 chiffre ensuite, à une étape 22, le formulaire de saisie de données de ciblage ou la liste de critères avec la clé de critère SK. Ce formulaire chiffré est transmis du serveur de collecte 12 au terminal 10. Ce formulaire peut être transmis durant la phase d'initialisation directement du serveur de collecte 12 au terminal 10 via le premier réseau 11 ou par l'intermédiaire d'un intermédiaire qui peut être le serveur d'anonymisation 13.

A une étape 23, le terminal 10 déchiffre le formulaire chiffré ou la liste de critères avec la clé de critère SK préablement enregistrée. Les opérations de chiffrement et de déchiffrement du terminal 10 peuvent être effectuées au sein de l'élément sécurisé dudit terminal (lorsque ce dernier en comporte une) ou par une application dédiée.

Le formulaire de saisie ou la liste de critère déchiffré est affiché via une interface graphique et comporte divers intitulés descriptifs dont la disposition sur un écran du terminal 10 permet de guider l'utilisateur dans la saisie de ses données de profil. En conséquence d'une validation par l'utilisateur de cette saisie, le terminal 10 chiffre, à une étape 24, le formulaire ou la liste de critères validé avec la clé de profil PK extraite de sa base de données.

Les données de profil de l'utilisateur peuvent également être issues d'une application téléchargée dans le terminal 10 qui après une période d'apprentissage, en utilisant par exemple l'historique de visualisation des programmes TV, ou des sites visités, ou des achats effectués sur internet, déduit les préférences de l'utilisateur. Les critères issus de la liste précédemment reçue, permettent à l'application de sélectionner le type de données de profil qui vont constituer le profil utilisateur à transmettre au serveur de collecte 12.

A une étape 25, le terminal 10 élabore un message de profil comprenant des données d'identification de l'utilisateur et les données de profil chiffrées à l'étape 24. Ce message de profil est ensuite transmis au serveur d'anonymisation 13.

Les données d'identification peuvent être l'adresse d'identification du terminal 10 tel qu'ici l'adresse Internet, source utilisée dans le protocole de transmission des données de profil, typiquement le protocole internet HTTP.

A une étape 26, le serveur d'anonymisation 13 extrait du message de profil les données d'identification qui doivent être anonymisées. A une étape 27, le serveur d'anonymisation 13 chiffre les données d'identification avec une clé d'anonymisation AK préalablement générée pour obtenir un identifiant chiffré. A une étape 28, le serveur d'anonymisation 13 élabore un message d'anonymisation comprenant les données d'identification anonymisées et les données de profil chiffrées reçu du message de profil. Ce message d'anonymisation est ensuite transmis par le serveur d'anonymisation 13 au serveur de collecte 12. Le serveur de collecte 12 ne pourra en aucun cas avoir accès aux données d'identification de l'utilisateur puisqu'elles sont chiffrées avec une clé non accessible audit serveur de collecte.

Le serveur de collecte 12 déchiffre, à une étape 29, les données de profil chiffrées avec la clé de profil PK extraite de sa base de données.

Le serveur de collecte 12 effectue, à une étape 30, une recherche dans sa base de données d'une annonce ciblée correspondant à un message visuel ou audio dont les caractéristiques correspondent le plus aux données de profil de l'utilisateur. Ce visuel ou audio peut comporter un contenu destiné à faire la promotion d'un produit, d'un service, d'un événement, d'une entreprise. Ce message peut également être une alerte ciblée, la liste n'étant bien entendue pas exhaustive.

Dans un autre mode de réalisation, le serveur de collecte 12 effectue à partir des données de profil déchiffrées des statistiques pour par exemple un relevé d'opinion, une mesure d'audience ou un relevé de consommation électrique.

A une étape 31, le serveur de collecte 12 chiffre cette annonce ciblée avec la clé de message MK extraite de sa base de données. A une étape 32, le serveur de collecte 12 élabore un message ciblé comprenant les données d'identification chiffrées ainsi que l'annonce ciblée chiffrée. Ce message ciblé est ensuite transmis au serveur d'anonymisation 13. A une étape 33, le serveur d'anonymisation 13 déchiffre les données d'identification chiffrées avec la clé d'anonymisation AK extraite de sa base de données. Le serveur d'anonymisation 13 transmet ensuite l'annonce ciblée chiffrée au terminal 10 destinataire identifié par les données d'identification. A une étape 34, le terminal 10 déchiffre l'annonce ciblée chiffrée avec la clé de message MK extraite de sa base de données.

Comme il va de soi, l'invention ne se limite pas aux modes de réalisation représentés sur les figures, à titre d'exemple ; elle en embrasse, au contraire, toutes les variantes de mise en oeuvre de ce procédé.

Dans un mode de réalisation, le serveur d'anonymisation 13 utilise un algorithme de chiffrement déterministe pour chiffrer les données d'identification de l'utilisateur avec la clé d'anonymisation AK. Cet algorithme de chiffrement déterministe est un cryptosystème qui produit toujours le même texte chiffré pour une même donnée. Le serveur de collecte 12 peut de ce fait observer le comportement de cet identifiant chiffré reçu du serveur d'anonymisation 13 au cours du temps. A travers les données de profil reçues pour cet identifiant chiffré, le serveur de collecte 12 peut par analyse statistique des identifiants chiffrés reçus affiner le profil des utilisateurs, sans pour autant connaître leur identité.

Dans un autre mode de réalisation, illustré à la figure 3, un serveur tiers 16 est interposé entre le serveur de collecte 12 et le terminal 10 utilisateur. Pour ce faire, le terminal 10 et ce serveur tiers 16 sont raccordés par un quatrième réseau 17. Le serveur tiers 16 et le serveur de collecte 12 de données sont raccordés par un cinquième réseau 18. Le serveur tiers 16 partage avec le serveur d'anonymisation 13 la clé d'anonymisation AK. Cette clé d'anonymisation AK peut être générée par le serveur d'anonymisation 13 qui le transmet ensuite au serveur tiers 16 pour mémorisation ou vice-versa. Dans une variante cette clé d'anonymisation peut être générée par un générateur de clés pour ensuite être transmis au serveur d'anonymisation 13 et au serveur tiers 16.

De préférence, le serveur tiers 16 est un serveur de confiance d'un organisme privé spécialisé et reconnu. Dans une variante, le serveur tiers 16 peut être une entité qui fournit un accès au réseau à l'utilisateur et lui attribue un identifiant pour communiquer sur ledit réseau.

Dans ce mode de réalisation, les étapes 20 à 31 illustrées à la figure 2 s'exécutent tel que décrites précédemment. A partir de l'étape 32, le serveur de collecte 12 transmet au serveur tiers 16 le message ciblé comportant l'annonce ciblée chiffrée et l'identifiant chiffré. Le serveur tiers 16 exécute l'étape 33 et transmet l'annonce ciblée chiffrée au terminal 10 destinataire.

Ce mode de réalisation permet grâce à la multiplication des acteurs de disperser les informations relatives à l'utilisateur afin de rendre leur corrélation difficile.

Dans un autre mode de réalisation, le serveur de collecte 12 transmet les données de profil déchiffrées à un fournisseur de contenu qui prend en charge la diffusion des annonces ciblées. En fonction des données reçues du serveur de collecte 12, le fournisseur de contenu sélectionne l'annonce ciblée adaptée et la transmet audit serveur de collecte en vue de l'exécution des étapes 31 et 32 de la figure 2.

Dans un autre mode de réalisation, la liste de critères des données de profil est échangée en clair entre le terminal 10 et le serveur de collecte 12 via le réseau 11. Le chiffrement des critères est en effet facultatif, mais préférable afin de rendre la réversibilité de l'anonymisation par le serveur d'anonymisation et le serveur tiers plus difficile.

Dans un mode de réalisation, afin d'optimiser la gestion et la mémorisation des clés secrètes au sein du serveur de collecte 12, le serveur de collecte 12 partage ce trio de clés avec l'ensemble des terminaux utilisateurs.

Dans un autre mode de réalisation ce trio de clés peut être réduit à une unique clé secrète. Cette clé secrète pouvant être utilisée pour chiffrer tout échange entre le serveur de collecte 12 et le terminal 10.

Les clés générées au cours du procédé d'anonymisation de l'invention sont par exemple un mot, une séquence de mots, un nombre pseudo-aléatoire ou un nombre d'une longueur de 128 bits, la liste n'est pas exhaustive.

Dans d'autres modes de réalisations d'autres architectures cryptographiques peuvent être envisagées, à savoir :
- une architecture ne mettant en oeuvre qu'un algorithme cryptographique symétrique, telle qu'illustrée par le mode de réalisation de la figure 2,
- une architecture ne mettant en oeuvre qu'un algorithme cryptographique asymétrique. Par ce mode de réalisation, chaque clé générée est une paire de clés privé/public. Dans ce cas, les données seront chiffrées avec la clé publique et déchiffrées avec la clé privée.
- une architecture composée par une combinaison de ces deux algorithmes.

Il peut également être envisagé de complexifier l'architecture cryptographique avec des signatures, des calculs d'intégrité...

Quelle que soit l'architecture réseau, l'architecture cryptographique et les acteurs choisis pour mettre en oeuvre l'invention, il faut s'assurer que les données permettant d'identifier l'utilisateur sont chiffrées avec une clé d'anonymisation et que le routage des échanges entre l'utilisateur et les différents acteurs soit fait de sorte que :
- les serveurs de collecte de données de ciblage ne soient pas en mesure d'accéder aux informations 'identification d'un utilisateur, et
- les serveurs intermédiaires entre le terminal et le serveur de collecte n'ait pas accès au profil de l'utilisateur.

Un avantage non négligeable de l'invention est que comme l'anonymisation des données d'identification de l'utilisateur est effectuée à la source, il n'est plus nécessaire de requérir l'aval de l'utilisateur pour traiter les données contenues dans le formulaire saisi du fait qu'elles ne sont plus critiques au regard de la loi.

## Revendications

1. Procédé d'anonymisation de données aptes à concourir à l'identification d'un utilisateur lors de la collecte d'un profil dudit utilisateur par un serveur de collecte (12) de données, ledit procédé comprenant les étapes suivantes :
- chiffrement des données de profil collectées par un terminal (10) dudit utilisateur avec une clé de confidentialité partagée entre ledit terminal et le serveur de collecte de données,
- transmission des données de profil chiffrées et des données aptes à concourir à l'identification de l'utilisateur à un serveur d'anonymisation (13) interposé entre le terminal et le serveur de collecte
- chiffrement des données aptes à concourir à l'identification de l'utilisateur avec une clé d'anonymisation dudit serveur d'anonymisation avant de relayer les données collectées chiffrées et les données d'identification anonymisées audit serveur de collecte.

2. Procédé d'anonymisation selon la revendication 1, dans lequel les données d'identification sont chiffrées selon un algorithme de chiffrement déterministe.

3. Procédé d'anonymisation selon l'une des revendications 1 à 2, dans lequel
- dès réception des données de profil collectées chiffrées, le serveur de collecte sélectionne une annonce ciblée en fonction des données de profil déchiffrées,
- le serveur de collecte transmet au serveur d'anonymisation un message ciblé comprenant les données d'identification anonymisées et l'annonce ciblée sélectionnée et chiffrée avec une clé partagée avec le terminal,
- le serveur d'anonymisation transmet l'annonce ciblée au terminal utilisateur correspondant aux données d'identification déchiffrées.

4. Procédé d'anonymisation selon l'une des revendications 1 à 2, dans lequel
- interposition d'un serveur tiers de confiance entre le terminal de l'utilisateur et le serveur de collecte,
- partage de la clé d'anonymisation entre le serveur tiers et le serveur d'anonymisation,
- dès réception des données de profil collectées chiffrées, le serveur de collecte sélectionne une annonce ciblée en fonction des données de profil déchiffrées,
- le serveur de collecte transmet au serveur tiers un message ciblé comprenant les données d'identification anonymisées et l'annonce ciblée sélectionnée et chiffrée avec une clé partagée avec le terminal,
- le serveur tiers transmet l'annonce ciblée au terminal utilisateur correspondant aux données d'identification déchiffrées avec la clé d'anonymisation.

5. Procédé d'anonymisation selon l'une des revendications 3 à 4, dans lequel l'annonce ciblée est un message visuel ou audio dont le contenu est destiné à faire la promotion d'un produit, d'un service, d'un événement, d'une entreprise, ou une alerte ciblée

6. Procédé d'anonymisation selon l'une des revendications précédentes, dans lequel la collecte des données de profil comprend les étapes suivantes :
- élaboration par le serveur de collecte d'une liste de critères de ciblage pour l'établissement du profil utilisateur,
- transmission de la liste de critères au terminal,
- génération des données de profil en fonction de cette liste de critères.

7. Procédé d'anonymisation selon la revendication précédente, dans lequel la génération des données de profil est issue d'une saisie de l'utilisateur ou d'une application du terminal qui après une période d'apprentissage est apte à déduire les préférences de l'utilisateur.

8. Procédé d'anonymisation selon l'une des revendications 6 à 7, dans lequel la liste de critères comprend une requête sur le genre de l'utilisateur (Homme ou femme), l'âge, la nationalité, la préférence musicale, les occupations préférées, la liste des programmes audiovisuels visualisés, le relevé des consommations électriques et/ou la localisation de l'utilisateur.

9. Procédé d'anonymisation selon l'une des revendications précédentes, dans lequel le serveur de collecte et le terminal utilisateur partage au moins une clé secrète utilisée pour chiffrer toutes les échanges, comprenant les données de profil, entre ledit serveur de collecte et ledit terminal.

10. Procédé d'anonymisation selon l'une des revendications précédentes, dans lequel le serveur de collecte partage avec le terminal utilisateur un trio de clés, ce trio de clés est composé :
- d'une clé de critère destinée à chiffrer la liste de critères relative au profil de l'utilisateur avant transmission par le serveur de collecte audit terminal utilisateur,
- d'une clé de profil destinée à chiffrer les données de profil avant transmission par le terminal utilisateur audit serveur de collecte,
- d'une clé de message destinée à chiffrer l'annonce ciblée, sélectionnée en fonction du profil de l'utilisateur, avant transmission par le serveur de collecte audit terminal utilisateur.

11. Procédé d'anonymisation selon l'une des revendications 9 ou 10, dans lequel le serveur de collecte partage la même clé ou le même trio de clés avec un ensemble de terminaux utilisateurs.

12. Procédé d'anonymisation selon l'une des revendications précédentes, dans lequel le terminal utilisateur est un téléphone mobile ou un assistant personnel, ou un ordinateur.

13. Procédé d'anonymisation selon l'une des revendications précédentes, dans lequel le serveur de collecte de données est un serveur de diffusion de publicités, de mesure d'audience ou de sondage.

14. Procédé d'anonymisation selon l'une des revendications précédentes, dans lequel le serveur d'anonymisation et le serveur tiers sont un opérateur qui fournit un accès au réseau à l'utilisateur dudit terminal ou un serveur d'un organisme privé spécialisé et reconnu.

15. Système d'anonymisation comprenant un serveur d'anonymisation interposé entre un terminal utilisateur et un serveur de collecte de données de profil de l'utilisateur, ledit système comprenant des moyens aptes à exécuter un procédé d'anonymisation des données aptes à concourir à l'identification dudit utilisateur lors de la collecte du profil dudit utilisateur par le serveur de collecte, selon l'une des revendications précédentes.
